# EUROPÄISCHE PATENTSCHRIFT

(11) **EP 1 935 074 B1**
(45) Veröffentlichungstag und Bekanntmachung des Hinweises auf die Patenterteilung: **12.12.2018**
(21) Anmeldenummer: 06793510.6
(22) Anmeldetag: 14.09.2006
(51) Int. Cl.: H02J 13/00, H02J 7/00, B60R 16/00

(54) **TRENNSCHALTERVORRICHTUNG ZUM TRENNEN EINES ELEKTRISCHEN STROMKREISES EINES FAHRZEUGS VON EINER ELEKTRISCHEN STROMQUELLE**
ISOLATING SWITCH DEVICE FOR SEPARATING AN ELECTRIC CIRCUIT OF A MOTOR VEHICLE FROM AN ELECTRIC POWER SOURCE
DISPOSITIF SECTIONNEUR PERMETTANT DE SECTIONNER LE CIRCUIT D'ALIMENTATION ELECTRIQUE D'UN VEHICULE D'UNE SOURCE D'ALIMENTATION ELECTRIQUE

(30) Priorität: 01.10.2005 DE 102005046569
(43) Veröffentlichungstag der Anmeldung: 25.06.2008
(73) Patentinhaber: Deere & Company, Moline, IL 61265 (US)
(72) Erfinder: WEBER, Norbert, 54657 Neidenbach (DE)
(74) Vertreter: Holst, Sönke
(86) Internationale Anmeldenummer: PCT/EP2006/066357
(87) Internationale Veröffentlichungsnummer: WO 2007/039427

(56) Entgegenhaltungen:
- DE-A1- 4 207 155
- DE-C1- 4 240 403
- GB-A- 2 233 802
- GB-A- 2 262 172
- JP-A- 2003 148 049

## Beschreibung

Die vorliegende Erfindung betrifft eine Trennschaltervorrichtung zum Trennen eines elektrischen Stromkreises eines Fahrzeugs von einer elektrischen Stromquelle, vorzugsweise zum Trennen eines elektrischen Gleichstromkreises eines Fahrzeugs von einer Autobatterie. Die Trennschaltervorrichtung umfasst einen Trennschalter, mit welchem eine zwischen der elektrischen Stromquelle und mindestens einem elektrischen Verbraucher verlaufende Hauptleitung unterbrechbar ist. Die Trennschaltervorrichtung ist in Abhängigkeit einer mehrere Schaltzustände aufweisende - und insbesondere zum Starten des Fahrzeugs vorgesehene - Schalteinrichtung steuerbar.

Trennschaltervorrichtungen der eingangs genannten Art sind aus dem Stand der Technik bekannt und sind für vielfältige Anwendungen spezifisch ausgebildet. So sind beispielsweise Trennschaltervorrichtungen bekannt, bei welchen im Falle eines Unfalls eine Hauptleitung des elektrischen Fahrzeug-Stromkreises mit pyrotechnischen Mitteln unterbrochen wird. Auch sind manuell betätigbare Schalter bzw. Trennrelais mit einem manuell betätigbaren Schalter bekannt, mit welchen eine Hauptleitung eines elektrischen Fahrzeug-Stromkreises unterbrechbar sind.

Aus der EP 0 410 617 A2 ist eine elektronisch angesteuerte Trennschaltervorrichtung bekannt, mit welcher eine Hauptleitung einer elektrischen Stromquelle zu mindestens einem Verbraucher unterbrechbar ist, wobei die Trennschaltervorrichtung in Abhängigkeit einer mehrere Schaltzustände aufweisende Schalteinrichtung steuerbar ist. Im Konkreten handelt es sich bei der Schalteinrichtung um den Zündschalter des Fahrzeugs.

Hierzu ist jedoch die elektrische Schaltung derart auszubilden, dass zumindest eine elektrische Leitung von dem Zündschalter des Fahrzeugs zu der Trennschaltervorrichtung vorzusehen ist und mit welcher eine entsprechende Ansteuerung der Trennschaltervorrichtung erfolgt. Eine nachträgliche Integration einer solchen Trennschaltervorrichtung gemäß der EP 0 410 617 A2 in einen bestehenden elektrischen Stromkreis eines Fahrzeugs ist daher nur dann möglich, wenn eine solche Verbindungsleitung zwischen Zündschalter und Trennschaltervorrichtung zusammen mit dem Trennschalter eingebaut wird. Dies ist jedoch aufwendig und kostenintensiv. Ein weiteres Beispiel der elektronisch gesteuerter Trennschaltervorrichtung ist in DE 42 07 155 A1 zu sehen.
Der vorliegenden Erfindung liegt daher die Aufgabe zugrunde, Trennschaltervorrichtung der eingangs genannten Art anzugeben und weiterzubilden, durch welche die vorgenannten Probleme überwunden werden. Insbesondere soll eine möglichst einfache und kostengünstige Aufrüstung eines bestehenden elektrischen Stromkreises eines Fahrzeugs mit einer Trennschaltervorrichtung möglich sein.
Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.
Erfindungsgemäß ist Trennschaltervorrichtung der eingangs genannten Art dadurch gekennzeichnet, dass die Trennschaltervorrichtung eine Signalerzeugereinheit, eine Signaldetektoreinheit und eine Signalverarbeitungseinheit aufweist. Mit der Signalerzeugereinheit ist ein elektrisches Signal generierbar, welches in den elektrischen Stromkreis einspeisbar ist und über einen Leitungspfad des elektrischen Stromkreises zu der Schalteinrichtung leitbar ist. Das elektrische Signal ist in Abhängigkeit des Schaltzustands der Schalteinrichtung zur Signaldetektoreinheit über einen - unter Umständen anderen - Leitungspfad des elektrischen Stromkreises leitbar. Falls also das elektrische Signal über einen Leitungspfad zur Signaldetektoreinheit gelangt, ist es von der Signaldetektoreinheit detektierbar. Mit der Signalverarbeitungseinheit ist in Abhängigkeit einer Detektion des elektrischen Signals die zwischen der elektrischen Stromquelle und dem mindestens einen Verbraucher verlaufende Hauptleitung durch den Trennschalter unterbrechbar oder schließbar.

Erfindungsgemäß ist zunächst erkannt worden, dass eine Trennschaltervorrichtung in Abhängigkeit einer Schalteinrichtung - also zum Beispiel eines Zündschalters eines Fahrzeugs - auch ohne eine extra hierzu vorgesehene elektrische Leitung ansteuerbar ist, wenn nämlich die Trennschaltervorrichtung derart ausgebildet ist, dass mit ihr ein elektrisches Signal in den elektrischen Stromkreis des Fahrzeugs einspeisbar ist, und dass mit der Trennschaltervorrichtung auf Grund einer Detektion des von ihr ausgesendeten Signals der Schaltzustand der Schaltereinrichtung detektierbar ist. Somit bedient man sich zum Senden/Empfangen des elektrischen Signals der bereits bestehenden Leitungsverbindungen des elektrischen Stromkreises des Fahrzeugs, so dass in ganz besonders vorteilhafter Weise zu diesem Zweck keine eigene elektrische Leitung vorzusehen ist. Dementsprechend kann der elektrische Stromkreis des Fahrzeugs einfacher ausgebildet werden und es ist eine unkomplizierte und schnelle Integration bzw. Aufrüstung eines bereits bestehenden elektrischen Stromkreises eines Fahrzeugs mit einer Trennschaltervorrichtung möglich.

Im Konkreten könnte die Schalteinrichtung ein mit einem Zündschlüssel betätigbares Zündschloss aufweisen. Alternativ hierzu ist es auch denkbar, dass die Schalteinrichtung eine mit einer Identifikationseinrichtung betreibbare Schalteinheit aufweist. Eine solche Schalteinrichtung wird insbesondere bei Kraftfahrzeugen neuerer Generation eingesetzt und ist beispielsweise durch einen elektrisch betätigbaren Einschalter gebildet, welcher dann bestimmungsgemäß betätigbar ist, wenn ein entsprechendes Identifikationsmittel von einem hier zu vorgesehenen Lesegerät ausgelesen wird. Die Identifikationseinrichtung könnte beispielsweise mit einem auf einem Chipkartenmodul oder auf einem Transponder bzw. R-FID basierenden Identifikationsmittel zusammenwirken.

In einer ganz besonders bevorzugten Ausführungsform ist das von der Signalerzeugereinheit erzeugte elektrische Signal gepulst. Hierzu können verschiedene Pulsformen und Pulsfrequenzen in Frage kommen. Im Allgemeinen wird das elektrische Signal im Niedervolt-Bereich liegen. Es wäre weiterhin denkbar, dass das von der Signalerzeugereinheit erzeugte elektrische Signal einer Wechselspannung oder einer Gleichspannung überlagert wird. Jedenfalls ist das elektrische Signal derart ausgebildet, dass hiermit eine Störung der am Fahrzeug bzw. am elektrischen Stromkreis vorgesehenen elektrischen Komponenten nicht möglich ist oder zumindest weitgehend ausgeschlossen ist.

Ganz besonders bevorzugt ist die Signaldetektoreinheit mit mindestens einer Leitung des elektrischen Stromkreises verbunden. Mit einer solchen Leitung wird ein spezifisches Signal geleitet, welches von einer entsprechenden Komponente der Fahrzeugelektrik erzeugt wird. Anhand dieses spezifischen Signals kann der aktuell vorliegende Betriebszustand des Fahrzeugs abgeleitet werden. Falls die Signaldetektoreinheit mit mindestens zwei Leitungen verbunden ist, könnte die Signaldetektoreinheit derart ausgebildet sein, dass auch detektierbar ist, über welche Leitung das elektrische Signal detektiert wird. Im Konkreten könnte die Signaldetektoreinheit mit den Leitungen "Start" und/oder "Ignition" ("Zündung ein") des elektrischen Stromkreises verbunden sein und somit die spezifischen Signale "Start" und "Zündung ein" detektieren. Ein weiteres Beispiel für ein spezifisches Signal ist das von einer Alarmanlage erzeugte elektrische Signal. Die dementsprechenden elektrischen Signale zum Starten und zur Zündung des Fahrzeugs stehen entweder dort zur Verfügung, wo letztendlich die Trennschaltervorrichtung in den elektrischen Stromkreis zu integrieren ist oder die Trennschaltervorrichtung wird an einer entsprechenden Stelle des elektrischen Stromkreises eingebaut, wo solche elektrischen Signalen zu Verfügung stehen.

Der Leitungspfad, über welchen das elektrische Signal in den elektrischen Stromkreis geleitet werden kann, könnte eine elektrische Leitung oder nahezu alle elektrische Leitungen des elektrischen Stromkreises und/oder einen elektrisch leitfähigen Teil der Karosserie des Fahrzeugs aufweisen.

Die elektrische Stromquelle könnte einen elektrischen Akkumulator aufweisen, welcher insbesondere in Form einer Autobatterie realisierbar ist.

In einer ganz besonders bevorzugten Ausführungsform der vorliegenden Erfindung ist die Trennschaltervorrichtung in Form einer modularen Baugruppe gebildet. Diese modulare Baugruppe könnte eine elektrische Schnittstelle zum Anschließen an den elektrischen Stromkreis aufweisen und könnte eine Platine aufweisen.

Nun könnte die Trennschaltervorrichtung zur Stromversorgung mit einer eigenen kleinen Stromquelle, beispielsweise einer Batterie oder einem Akkumulator, bestückt sein. Bevorzugt ist die Trennschaltervorrichtung jedoch derart ausgebildet, dass die elektrischen Komponenten der Trennschaltervorrichtung von der Stromquelle des elektrischen Stromkreises des Fahrzeugs versorgbar sind. Somit entnimmt die erfindungsgemäße Trennschaltervorrichtung die zum Erzeugen, zum Senden und Empfangen des elektrischen Signals sowie zum Betätigen des Trennschalters erforderliche elektrische Energie dem elektrischen Stromkreis selbst bzw. der Stromquelle des elektrischen Stromkreises.

Bevorzugt ist mindestens eine elektrische Leitung des elektrischen Stromkreises vorgesehen, welche die Stromquelle mit mindestens einem elektrischen Verbraucher verbindet, wobei eine solche Leitung nicht von dem Trennschalter unterbrechbar ist. dies betrifft insbesondere elektrische Leitungen, welche für geringe Spannungen oder Ströme ausgelegt sind und welche die Stromquelle des elektrischen Stromkreises beispielsweise mit einer im Fahrzeug vorgesehenen Uhr, einem Radio oder einem Fahrzeug-Controller verbinden.

In einer bevorzugten Ausführungsform ist der Trennschalter der Trennschaltervorrichtung in Abhängigkeit von der Detektion mehrerer elektrischer Signale ansteuerbar. Somit wird die Ansteuerung des Trennschalters beispielsweise von einer Detektion des elektrischen Signals, welches von der Signalerzeugereinheit erzeugt wird, und der Detektion eines weiteren elektrischen Signals, beispielsweise des Signals "Zündung ein", abhängig gemacht. Ein weiteres Beispiel ist die Verwendung eines elektrischen Signals, welches von einer Alarmanlage des Fahrzeugs erzeugt wird. Beim Vorliegen dieses Signals, also bei ausgelöster Alarmanlage, könnte der Trennschalter geöffnet werden, so dass das Fahrzeug nicht gestartet werden kann und hierdurch letztendlich eine Wegfahrsperre des Fahrzeugs realisiert wird.

Somit weist die erfindungsgemäße Trennschaltervorrichtung im Wesentlichen die folgenden Vorteile auf:
- Es ist eine einfache Integration in ein beliebiges Fahrzeug möglich,
- es sind keine Änderungen einer bestehenden Fahrzeugelektrik bzw. eines bestehenden elektrischen Stromkreises erforderlich,
- es werden keine zusätzliche Sensorik oder Steuereinheiten benötigt,
- eine automatische Ansteuerung der Trennschaltervorrichtung erfolgt unabhängig von einem Fahrer bzw. Bediener des Fahrzeugs,
- ein manueller Schalter, der speziell zum Trennen einer zwischen der elektrischen Stromquelle und mindestens einem Verbraucher verlaufenden Hauptleitung vorgesehen ist, ist nicht mehr erforderlich,
- eine Ansteuerung der Trennschaltervorrichtung in Abhängigkeit des Zündschlosses ist ohne eine hierzu speziell vorgesehene elektrische Leitung möglich und
- es ist kein neues Zündschloss mit einem zusätzlichen unabhängigen Kontakt erforderlich.

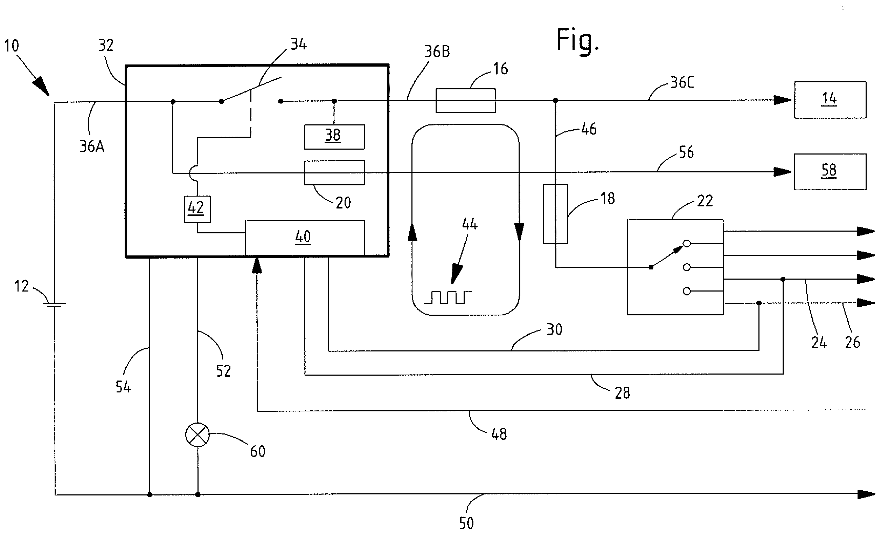

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung des bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: ein Ausführungsbeispiel einer erfindungsgemäßen Trennschaltervorrichtung, welche in einem elektrischen Stromkreis eines Fahrzeugs integriert ist.

In der einzigen Figur ist in einer schematischen Darstellung ein Teil des elektrischen Stromkreises 10 eines in der einzigen Figur nicht dargestellten Fahrzeugs gezeigt. Der elektrische Stromkreis 10 weist eine Autobatterie 12 auf, mit welcher - lediglich schematisch gezeigte - elektrische Verbraucher 14 des Fahrzeugs versorgbar sind. Als elektrische Verbraucher kommen grundsätzlich alle Verbraucher in Frage, insbesondere jedoch der Anlasser des Fahrzeugs, der Anlasserstromkreis oder der Kompressor einer Klimaanlage in Frage, die in der Fig. jedoch nicht gezeigt sind.

Weiterhin umfasst der elektrische Stromkreis 10 eine Hauptsicherung 16, eine Vorsicherung 18 sowie eine elektronische Sicherung 20.

Die Schalteinrichtung 22 ist in Form eines Zündschalters ausgebildet. Mit dem Zündschalter kann das Fahrzeug gestartet bzw. ausgeschaltet werden. Dementsprechend kann mit der Schalteinrichtung 22 eine elektrische Verbindung zwischen der Autobatterie 12 und beispielsweise den Starterkomponenten des Fahrzeugs (in der einzigen Figur nicht gezeigt) in Abhängigkeit deren Schalterstellung hergestellt werden. Im Konkreten ist vorzugsweise das Signal "Zündung ein" zu verwenden. Eine Abhängigkeit von einem oder mehreren Signalen ist möglich. Von den Leitungen 24, 26 verlaufen jeweils die Leitungen 28, 30 zu der Trennschaltervorrichtung 32.

Die Trennschaltervorrichtung 32 umfasst den elektrisch betätigbaren Trennschalter 34, mit welchem die Hauptleitung 36A, 36B unterbrechbar oder schließbar ist.

Erfindungsgemäß weist die Trennschaltervorrichtung 32 eine Signalerzeugereinheit 38, eine Signaldetektoreinheit 40 und eine Signalverarbeitungseinheit 42 auf. Mit der Signalerzeugereinheit 38 ist ein gepulstes elektrisches Signal erzeugbar (angedeutet durch das Bezugszeichen 44) und über die Hauptleitung 36B in den elektrischen Stromkreis 10 einspeisbar.

Dementsprechend kann das elektrische Signal über den Leitungspfad zurück zur Trennschaltervorrichtung 32 gelangen, der durch den weiteren Verlauf der Leitung 36C zu den elektrischen Verbrauchern 14 und gegebenenfalls über die Steuersignalleitung 48 oder die Leitungen 50, 52, 54 gebildet ist. Alternativ und in Abhängigkeit der Schalterstellung der Schalteinrichtung 22 kann das elektrische Signal über den Leitungspfad zur Trennschaltervorrichtung 32 und zurück zur der Detektoreinrichtung 40 gelangen, wobei der Leitungspfad durch die Leitungen 36B, 46, die Schalteinrichtung 22 und entweder über die Leitungen 24, 28 oder über die Leitungen 26, 30 gebildet ist. Es ist auch möglich, dass das von der Signalerzeugereinheit 38 ausgesendete elektrische Signal nicht zurück zur Trennschaltervorrichtung 32 gelangt, weil beispielsweise einzelne Komponenten des elektrischen Stromkreises 10, insbesondere die Schalteinrichtung 22, keine elektrische Leitungsverbindung bzw. keinen Leitungspfad zwischen der Signalerzeugereinheit 38 und der Signaldetektoreinheit 40 herstellen. Falls es jedoch einen solchen Leitungspfad gibt, ist das elektrische Signal von der Signaldetektoreinheit 40 detektierbar.

Die Signaldetektoreinheit 40 ist derart ausgebildet, dass mit ihr nicht nur das elektrische Signal selbst detektierbar ist, sondern es ist auch feststellbar, über welche elektrische Leitung das elektrische Signal detektiert wird. Die Signaldetektoreinheit 40 generiert ihrerseits ein Signal, was der Signalverarbeitungseinheit 42 zur Verfügung gestellt wird. In Abhängigkeit davon, ob ein elektrisches Signal detektiert wurde oder nicht bzw. über welchen Leitungspfad das elektrische Signal von der Signaldetektoreinheit 40 detektiert wurde, wird der Trennschalter 34 geschaltet, der beispielsweise ein herkömmliches Relais aufweisen könnte. Somit kann in Abhängigkeit der Schalterstellung bzw. des Schaltzustands der Schalteinrichtung 22 die Trennschaltervorrichtung 32 und im Konkreten der Trennschalter 34 geschaltet werden, ohne dass hierzu eine unmittelbare Leitungsverbindung zwischen der Schalteinrichtung 22 und der Trennschaltervorrichtung 32 erforderlich ist.

In der einzigen Figur sind die Signalerzeugereinheit 38, die Signaldetektoreinheit 40 und die Signalverarbeitungseinheit 42 als getrennte Bauteile eingezeichnet. Selbstverständlich könnte es sich bei diesen drei Bauteilen auch um eine in einer Baugruppe zusammengefassten elektrischen Einheit handeln.

Über die Leitung 56 steht die Autobatterie 12 mit weiteren elektrischen Verbrauchern 58 ständig in Verbindung. Dementsprechend werden die elektrischen Verbraucher 58 unabhängig von der Schalterstellung des Trennschalters 34 ständig von der Autobatterie 12 mit elektrischem Strom versorgt. Bei den elektrischen Verbrauchern 58 handelt es sich um ein Autoradio, einem oder mehrere Controller zum Ansteuern einzelner Fahrzeugkomponenten (zum Beispiel den Verbrennungsmotor oder das Getriebe). Mit dem Bezugszeichen 60 ist eine Kontrollanzeige gekennzeichnet.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Trennschaltervorrichtung zum Trennen eines Anlasserstromkreises (14) eines Fahrzeugs von einer elektrischen Stromquelle (12) in einem elektrischen Stromkreis (10) des Fahrzeugs, mit einem Trennschalter (34), mit welchem eine zwischen der elektrischen Stromquelle (12) und dem Anlasserstromkreis (14) verlaufende Hauptleitung (36A, 36B, 36C) unterbrechbar ist, **dadurch gekennzeichnet, dass** die Trennschaltervorrichtung (32) eine Signalerzeugereinheit (38), eine Signaldetektoreinheit (40) und eine Signalverarbeitungseinheit (42) aufweist, wobei die Signalerzeugereinheit (38) ein elektrisches Signal erzeugt, welches durch Einspeisung in den elektrischen Stromkreis (10) über einen Leitungspfad (36B, 46) des elektrischen Stromkreises (10) zu einer mehrere Schaltzustände aufweisenden Schalteinrichtung (22) geleitet wird, wobei das elektrische Signal in Abhängigkeit des Schaltzustands der Schalteinrichtung (22) über einen Leitungspfad (24, 28; 26, 30) des elektrischen Stromkreises (10) zur Signaldetektoreinheit (40) geleitet und von der Signaldetektoreinheit (40) detektiert wird, und wobei die Signalverarbeitungseinheit (42) in Abhängigkeit einer Detektion des elektrischen Signals den Trennschalter (34) zur Unterbrechung der zwischen der elektrischen Stromquelle (12) und dem mindestens einen Verbraucher (14) verlaufenden Hauptleitung (36A, 36B) schließt.

2. Trennschaltervorrichtung nach Anspruch 1 **dadurch gekennzeichnet, dass** das von der Signalerzeugereinheit (38) erzeugte elektrische Signal gepulst ist.

3. Trennschaltervorrichtung nach einem der Ansprüche 1 bis 2, **dadurch gekennzeichnet, dass** das von der Signalerzeugereinheit (38) erzeugte elektrische Signal eine Wechselspannung oder eine Gleichspannung aufweist.

4. Trennschaltervorrichtung nach einem der Ansprüche 1 bis 3, **dadurch gekennzeichnet, dass** das von der Signalerzeugereinheit (38) erzeugte elektrische Signal einer Wechselspannung oder einer Gleichspannung überlagert wird.

5. Trennschaltervorrichtung nach einem der Ansprüche 1 bis 4, **dadurch gekennzeichnet, dass** die Signaldetektoreinheit (40) mit mindestens einer Leitung (28, 30, 48, 52, 54) des elektrischen Stromkreises (10) verbunden ist.

6. Trennschaltervorrichtung nach einem der Ansprüche 1 bis 5, **dadurch gekennzeichnet, dass** der Leitungspfad eine elektrische Leitung (36B, 46, 28, 30) des elektrischen Stromkreises (10) oder einen elektrisch leitfähigen Teil der Karosserie des Fahrzeugs aufweist.

7. Trennschaltervorrichtung nach einem der Ansprüche 1 bis 6, **dadurch gekennzeichnet, dass** mindestens eine nicht von dem Trennschalter (34) unterbrechbare elektrische Leitung (56) des elektrischen Stromkreises (10) vorgesehen ist, welche die Stromquelle (12) mit mindestens einem elektrischen Verbraucher (58) verbindet.

8. Trennschaltervorrichtung nach einem der Ansprüche 1 bis 7, **dadurch gekennzeichnet, dass** der Trennschalter (34) in Abhängigkeit einer Detektion eines von einer Alarmanlage des Fahrzeugs erzeugbaren elektrischen Signals geöffnet wird.

## Claims

1. Isolating switch apparatus for isolating a starter circuit (14) of a vehicle from an electrical power source (12) in an electrical circuit (10) of the vehicle, having an isolating switch (34), which can be used to interrupt a main line (36A, 36B, 36C) running between the electrical power source (12) and the starter circuit (14), **characterized in that** the isolating switch apparatus (32) has a signal generator unit (38), a signal detector unit (40) and a signal processing unit (42), wherein the signal generator unit (38) generates an electrical signal, which is conducted, through infeeding into the electrical circuit (10), via a line path (36B, 46) of the electrical circuit (10) to a switching device (22) having a plurality of switching states, wherein the electrical signal is conducted, depending on the switching state of the switching device (22), via a line path (24, 28; 26, 30) of the electrical circuit (10) to the signal detector unit (40) and is detected by the signal detector unit (40), and wherein the signal processing unit (42) closes the isolating switch (34) depending on a detection of the electrical signal in order to interrupt the main line (36A, 36B) running between the electrical power source (12) and the at least one load (14).

2. Isolating switch apparatus according to Claim 1, **characterized in that** the electrical signal generated by the signal generator unit (38) is pulsed.

3. Isolating switch apparatus according to one of Claims 1 to 2, **characterized in that** the electrical signal generated by the signal generator unit (38) has an AC voltage or a DC voltage.

4. Isolating switch apparatus according to one of Claims 1 to 3, **characterized in that** the electrical signal generated by the signal generator unit (38) is superposed on an AC voltage or a DC voltage.

5. Isolating switch apparatus according to one of Claims 1 to 4, **characterized in that** the signal detector unit (40) is connected to at least one line (28, 30, 48, 52, 54) of the electrical circuit (10).

6. Isolating switch apparatus according to one of Claims 1 to 5, **characterized in that** the line path has an electrical line (36B, 46, 28, 30) of the electrical circuit (10) or an electrically conductive part of the body of the vehicle.

7. Isolating switch apparatus according to one of Claims 1 to 6, **characterized in that** at least one electrical line (56) of the electrical circuit (10), which line cannot be interrupted by the isolating switch (34) and connects the power source (12) to at least one electrical load (14), is provided.

8. Isolating switch apparatus according to one of Claims 1 to 7, **characterized in that** the isolating switch (34) is opened depending on a detection of an electrical signal that can be generated by an alarm installation of the vehicle.

## Revendications

1. Arrangement sectionneur destiné à déconnecter un circuit électrique de démarreur (14) d'un véhicule d'une source de courant électrique (12) dans un circuit électrique (10) du véhicule, comprenant un sectionneur (34) qui permet d'interrompre une ligne principale (36A, 36B, 36C) s'étendant entre la source de courant électrique (12) et le circuit électrique de démarreur (14), **caractérisé en ce que** l'arrangement sectionneur (32) possède une unité de génération de signal (38), une unité de détection de signal (40) et une unité de traitement de signal (42), l'unité de génération de signal (38) générant un signal électrique qui est conduit jusqu'à un dispositif de commutation (22) possédant plusieurs états de commutation par injection dans le circuit électrique (10) par le biais d'un trajet de conduction (36B, 46) du circuit électrique (10), le signal électrique étant acheminé à l'unité de détection de signal (40) par le biais d'un trajet de conduction (24, 28 ; 26, 30) du circuit électrique (10) en fonction de l'état de commutation du dispositif de commutation (22) et étant détecté par l'unité de détection de signal (40), et l'unité de traitement de signal (42) fermant le sectionneur (34) en fonction d'une détection du signal électrique en vue d'interrompre la ligne principale (36A, 36B) qui s'étend entre la source de courant électrique (12) et l'au moins un récepteur (14).

2. Arrangement sectionneur selon la revendication 1, **caractérisé en ce que** le signal électrique généré par l'unité de génération de signal (38) est pulsé.

3. Arrangement sectionneur selon l'une des revendications 1 et 2, **caractérisé en ce que** le signal électrique généré par l'unité de génération de signal (38) possède une tension alternative ou une tension continue.

4. Arrangement sectionneur selon l'une des revendications 1 à 3, **caractérisé en ce que** le signal électrique généré par l'unité de génération de signal (38) est superposé à une tension alternative ou à une tension continue.

5. Arrangement sectionneur selon l'une des revendications 1 à 4, **caractérisé en ce que** l'unité de détection de signal (40) est reliée à au moins une ligne (28, 30, 48, 52, 54) du circuit électrique (10).

6. Arrangement sectionneur selon l'une des revendications 1 à 5, **caractérisé en ce que** le trajet de conduction possède une ligne électrique (36B, 46, 28, 30) du circuit électrique (10) ou une partie électriquement conductrice de la carrosserie du véhicule.

7. Arrangement sectionneur selon l'une des revendications 1 à 6, **caractérisé en ce qu'**au moins une ligne électrique (56) du circuit électrique (10) qui ne peut pas être interrompue par le sectionneur (34) est prévue, laquelle relie la source de courant (12) à au moins un récepteur électrique (58).

8. Arrangement sectionneur selon l'une des revendications 1 à 7, **caractérisé en ce que** le sectionneur (34) est ouvert en fonction d'une détection d'un signal électrique pouvant être généré par un équipement d'alarme du véhicule.
